Europäisches Patentamt

European Patent Office

Office européen des brevets

(11) Publication number: **0 410 103 A1**

# EUROPEAN PATENT APPLICATION

(21) Application number: **90109719.6**

(22) Date of filing: **22.05.90**

(51) Int. Cl.5: **G06F 3/153**

(30) Priority: **20.07.89 FR 8909772**

(43) Date of publication of application:
**30.01.91 Bulletin 91/05**

(84) Designated Contracting States:
**DE FR GB**

(71) Applicant: **W.L. GORE & ASSOCIATES, SARLARL**
**Z.I. de St. Guenault, Rue Jean-Meroz**
**F-91031 Evry Cédex(FR)**

(72) Inventor: **Bonnat, Michel**
**90 rue de la République**
**F-95330 Malesherbes(FR)**

(74) Representative: **Klunker . Schmitt-Nilson . Hirsch**
**Winzererstrasse 106**
**D-8000 München 40(DE)**

(54) Switching device between a computer setup and an imager type peripheral.

(57) A switching device between a multiplicity of computers (01-04), each including a display screen (E1-E4), and a peripheral (P) for recording of screen images or analogous images, each computer including a first output for a video display signal, a second output for numerical signals and each screen including an input for a video display signal, while the peripheral includes a first input for a video signal of an image to be recorded, a second input for numerical signals and an output for a video command signal, characterized by the fact that it includes means (100) in order to select which of said computers should be connected to the peripheral and switching means (200) commanded by the selection means in order to connect the first and second outputs of said selected computer to the first and second inputs of the peripheral and in order to connect the output of said peripheral to the input of the screen of said selected computer, and in order to simultaneously connect the first output of each of the non-selected computers to the input of their respective screens.

FIG.4

## FIELD OF THE INVENTION

The invention pertains to a switching device between a multiplicity of computers (01-04), each including a screen (E1-E4) and a peripheral (P) for recording of screen images, each computer including a first output for a video display signal, a second output for numerical signals and each screen including an input for a video display signal, while the peripheral includes a first input for a video signal of an image to be recorded, a second input for numerical signals and an output for a video command signal.

## BACKGROUND OF THE INVENTION

The switching device (DC) is characterized by the fact that it includes means in order to select which of said computers should be connected to the peripheral and switching means commanded by the selection means in order to connect the outputs of said selected computer to the inputs of the peripheral and in order to connect the output of said peripheral to the input of the screen of said selected computer, and in order to simultaneously connect the first output of each of the non-selected computers to the input of their respective screens.

The present invention pertains in a general fashion to the interconnection between computers and their peripherals, and more particularly concerns a switching device between at least two computers and an "imager" type peripheral or analogous device.

By "imager" device, this means an apparatus suitable for converting an electrical signal of a video image, designed on the screen of the computer, into a recording on whatever support medium, for example transparency, paper, slide or even magnetic tape (in this last case, the peripheral is of the magnetoscope type), etc.

The link between a computer, for example a personal computer or a graphics work station, and such a peripheral requires on the one hand the connection between the screen output of the computer and a video input of the imager, and on the other hand the connection between the sehal output (type RS232 or analogous means) of the computer and a numerical input of the imager, and finally the connection between the video command output of the imager and the screen of the computer.

In the earlier techniques, these connections were normally accomplished by appropriate cables connected to the devices by connectors, such as standardized nine-plug connectors.

Thus when several computers must share the same peripheral, each time the user of a computer wishes to store or print an image present on his screen, it is necessary to disconnect the computer previously connected to the peripheral and instead connect the computer in question. These operations are time consuming and tedious; in addition, they must be performed by qualified personnel in order to avoid with certainty any errors in the connections.

In addition, the operation of disconnection of the previously connected computer involves a temporary disconnection of the central unit and the screen, consequently with temporary elimination of the image.

In certain cases, this disconnection may produce the stopping of the logical, which of course must be avoided at any cost.

The present invention seeks to propose a device allowing the selective connection to a peripheral of one computer from a multiplicity of computers, while eliminating all of the previously cited disadvantages. More precisely, a device is proposed which allows the connection and disconnection of a computer in a fashion which is completely unnoticeable by all the users.

## SUMMARY OF THE INVENTION

To this end, the present invention pertains to a switching device between a multiplicity of computers, each including a display screen, and a peripheral for recording screen images or analogous images, each computer including a first output for a video display signal and a second output for numerical signals, each screen including an input for a video display signal, while the peripheral includes a first input for a video signal of an image to be recorded, a second input for numerical signals and an output for a video command signal, characterized by the fact that it includes means in order to select which of said computers should be connected to the peripheral and switching means commanded by the selection means in order to connect the first and second outputs of said selected computer to the first and second inputs of the peripheral and in order to connect the output of said peripheral to the input of the screen of said selected computer, and in order to simultaneously connect the first output of each of the non-selected computers to the input of their respective screens.

Other aspects, and advantages of the present invention will be better understood from the following detailed description of one preferred form of accomplishment of the invention, given as a non-limiting illustrative example and made with reference to the attached designs, on which:

## BRIEF DESCRIPTION OF THE DRAWINGS

Figures 1a and 1b illustrate a computer respectively disconnected from a peripheral for recording of images and connected to that conforming to the earlier technique;

Figure 2 is a block diagram of an installation including a multiplicity of computers, each including a screen and sharing a common peripheral for recording of images, equipped with a switching device conforming to the present invention;

Figure 3 is a circuit diagram pertaining to the switching unit; and

Figure 4 is a general diagram of the switching device.

## DESCRIPTION OF THE INVENTION

First of all, it will be indicated that from one figure to another, identical or similar elements or parts are designated by the same reference numbers.

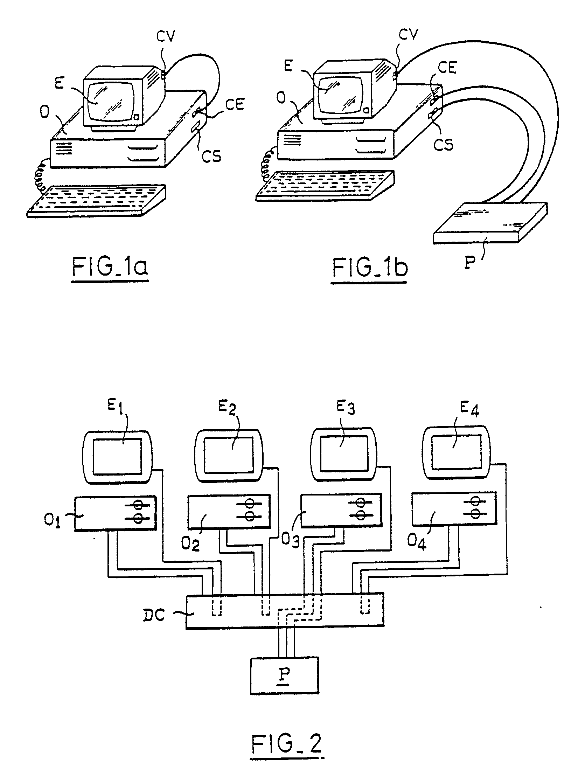

In referring first of all to figures 1a and 1 b, a computer, for example a micro-computer or work station allowing the creation of graphic images, is designated by 0 and includes a screen E. The computer 0 normally includes a first connector CE for the screen, in order to furnish the video display signals to it, as well as a second connector CS for a serial numerical output, allowing the computer to communicate with the exterior, for example according to the RS232 standard.

Classically, when one wishes to link this computer with a peripheral P designed for example for the recording or printing of the images present on the screen E on a support, the outputs CE and CS are connected respectively to a video input and a numerical input of the peripheral P, while a command output of this last is connected to the connector CV of the screen E (Figure 1b).

Thus when several computers must share the same peripheral of this type, each change in the computer selected requires elimination of the connections with the previously selected computer and establishment of the connections with the new computer connected, with problems such as those mentioned in the introduction.

With reference to Figures 2 to 4, a switching device will now be described which is designed to facilitate the sharing by several computers of the same peripheral of the type mentioned in the example which follows, the number of these computers is equal to four, but this figure is not limiting in any fashion.

Schematically and with reference first of all to Figure 2, the switching device DC is connected on the one hand to four computers 01 to 04, each including a screen E1 to E4, and on the other hand to a single peripheral P of imager type for the recording to screen images or their printing on a support.

The device DC is connected to the serial output and to the screen output of each computer and to the video input of each associated screen. It is also connected to the video and numerical inputs of the peripheral P and to its video command output.

The device DC has the function of connecting the selected computer to the peripheral, while allowing the other computers to function normally. To this end, the screen and serial outputs of the selected computer are connected to the video input of the screen of the computer selected, and finally the screen outputs of each of the other computers are connected respectively within the device DC to the video inputs of the associated screens, while the serial outputs of said other computers are not connected to anything. In Figure 2, the case where computer 03 is connected to the peripheral is illustrated, while for the other computers the screen output is connected to the video screen input by passing through the device DC.

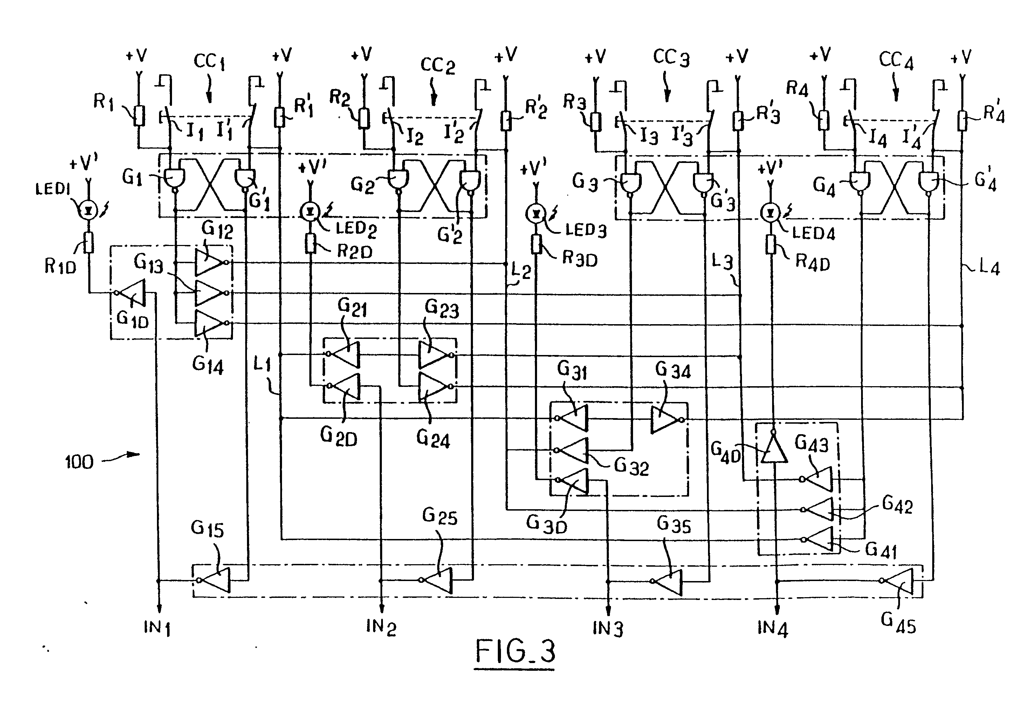

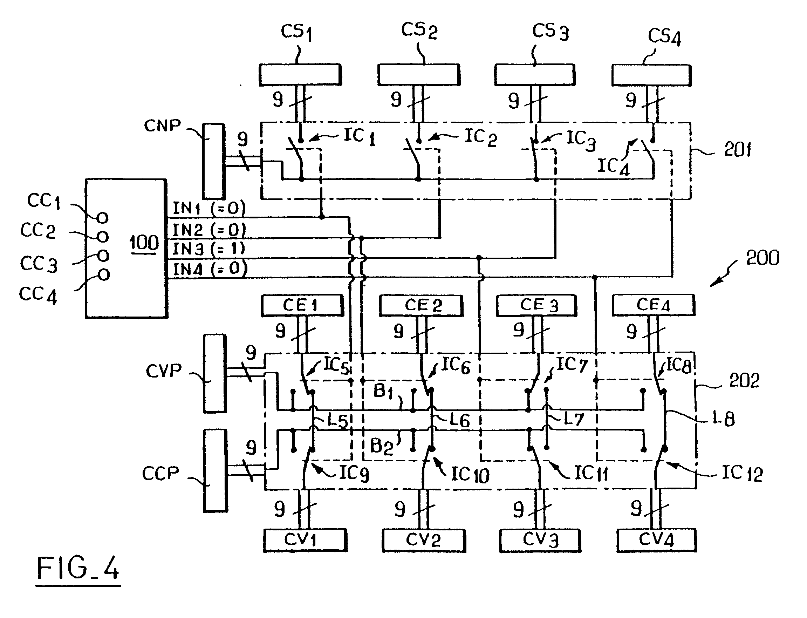

The device DC is illustrated in more detail on Figures 3 and 4.

Figure 3 represents a circuit for selection of the device DC, which allows four command signals to be produced, IN1 to IN4 respectively, which are a function of the state of the command switches CC1 to CC4, serving to select one of the four computers for its connection with the peripheral P.

The selection circuit 100 includes four identical units, so only one will be described below for simplicity.

The transitory type command switch CC1 includes two interrupters 11 and 11', respectively open and closed at rest. The first contacts of these two reversers are both connected to the mass, while their second contact is connected to a continuous positive voltage source + V, for example of 5 volts, via a resistance, respectively R1 and R1'.

These second contacts are also connected to two respective inputs of two ports NON-ET G1 and G1', normally mounted in a flip-flop circuit as illustrated.

The output of the port G1 engages three reversers G12, G13 and G14.

The output of the port N1' engages another reverser G1S, whose output furnishes a command signal IN1, as will be seen later. This same output from GIS engages another reverser G1D, whose output is connected to the cathode of an electroluminescent signalling diode LED1 via a resistance R1 D. The anode of LED1 is connected to a continuous voltage source +V', for example of 15 volts.

In addition, a lock-out line L1 is connected to the second contact of the interrupter 11'.

The outputs of the ports G12 to G14 are connected respectively to the lock-out lines L2 to L4 of the other three units. More generally, each unit includes three reversers connected to the output of one of the ports NON-ET and whose outputs respectively engage the lock-out lines of the other three units. Thus the lock-out line L1 receives the outputs from the reversers G21, G31 and G41 of the other three units.

The other units of the circuit 100 are identical, the corresponding parts being designated by the same references with a change of the indices "1" into "2", "3" and "4", respectively.

The circuit 100 operates in the following manner: when the command switch CC1 is at rest as illustrated, the inputs of the two ports NON-ET G1 and G1' constituting the toggle switch are respectively at the logical levels "1" and "0", so that their outputs are respectively at the logical levels "0" and "1". Consequently, the output IN1 is at the logical level "0", the output of the reverser G1D is at the logical level "1" and the diode LED1 is out. At the same time, the reversers G12 to G14 have their outputs at the logical level "1".

By initially assuming that the lock-out line L1 for the moment receives only "1" logicals, that is to say that all the other switches C2 to C4 are also at rest, when CC1 is toggled, the inputs of the ports G1 and G1' pass to the logical levels "0" and "1" respectively, so that their respective outputs are at "1 " and "0". The output IN1 thus passes to the logical level "1" and the cathode of the LED1 is placed in the mass via the output of the reverser G1D, which is at the lowest logical level. At the sametime,the outputs of the reversers G12 to G14 are at the logical level "0', and force the lock-out lines L2 to L4 of the other three units to this same level in order to inhibit the other switches CC2 to CC4, as will be seen below.

Thus, if for example a user attempts to toggle the switch CC2 outside of the position illustrated on Figure 3 when CC1 has already been toggled, the opening of 12 does not have the effect of placing the input of the port P2' at "1", since this input is forced to "0" by the lock-out line L2. In this case, the inputs of the ports P2 and P2' are both at the logical level "0" (abnormal state) and the outputs of P2 and P2' are both at "1". Despite this manipulation of CC2, it turns out that the signal IN2 remains at the logical level "0".

In addition, if one of the reversers G21, G31 and G41 connected to the lock-out line L1 delivered a logical level "0", the command output IN1 could not be brought to the logical level "1" with the manipulation of CC1, as previously described.

Thus the selection circuit 100 described above allows on the one hand the selection of which of the command outputs IN1 to IN4 will be brought to the logical level "1", but also ensures that while one of the outputs IN1 to IN4 is at the logical level "1", none of the other outputs can be brought to this same level.

As will be seen later, this allows one to avoid the situation where several computers are connected simultaneously to the peripheral, with the obvious conflict of access which would result.

Now with reference to Figure 4, there is represented the assemblage of the switching device, which includes the selection circuit 100, a switching circuit 200, to which said selection circuit 100 is functionally connected, and finally an assemblage of connectors in order to connect the device to the four computers and the peripheral.

Thus four connectors CE1 to CE4 are designed to receive the screen outputs of the computers 01 to 04, four connectors CS1 to CS4 are designed to receive the serial outputs of said computers, and four connectors CV1 to CV4 must be connected to the video inputs of the screen E1 to E4. There are also represented a connector CVP, a connector CNP and a connector CCP, which must be connected respectively to the video input, the numerical input and the video command output of the peripheral.

In the present example, all the connectors are standardized nine-plug connectors and are connected to the switching circuit by respective bundles of nine conductors, as illustrated.

The switching circuit 200 includes a first unit 201 including four interrupters commanded with nine pathways, respectively IC1 to IC4, whose first terminals are connected in common with the plugs of the connector CNP and whose second terminals are connected respectively to the plugs of the four serial connectors CS1 to CS4.

The interrupters IC1 to IC4 are commanded respectively by the signals IN1 to IN4, and are designed to be opened when they receive a command signal at the logical level "0" and closed when they receive a command signal at the logical level "1".

The circuit 200 includes a second switching unit including eight reversers commanded with nine pathways, respectively IC5 to IC12. The reversers IC5 to IC8, commanded respectively by the signals IN1 to IN4, allow the nine lines of the connectors CE1 to CE4, to which they are connected, to affect either the nine lines of the connector VP, via a bus designated 81 on Figure 4, or the lines designated respectively L5 to L8. The reversers IC9 to IC12, also commanded respectively by the signals IN1 to IN4, allow the nine lines of the connectors CV1 to CV4, to which they are connected, to affect either the nine lines of the connector CCP, via a bus designated B2, or the lines L5 to L8 mentioned above.

With the first hypothesis, the screen output of the computer considered is connected to the video input of the peripheral, and simultaneously the video command output of the peripheral is connected to the video input of the computer considered.

With the second hypothesis, the screen output of the computer considered is connected to the video input of the associated screen, so that the computer functions normally, the diagram of figure 1a being reconstituted to that representing the video signal, with the destination of the screen conveyed via the switching device.

In the situation illustrated on Figure 4, the signals IN1, IN2 and IN4 are at "0", while the signal IN3 is at "1", these signals being obtained by the toggling of CC3 as indicated earlier. This signifies that the switching circuit must connect the computer 03 to the peripheral and simultaneously ensure the return toward the screens E1, E2 and E4 of the video display signals present on the screen connectors of the other computers 01, 02 and 04.

Thus the interrupters IC1, IC2 and IC4 are opened, while the interrupter IC3 is closed and connects the connectors CS3 and CNP to one another.

In addition, the pairs of reversers IC5-IC9, IC6-1C10 and IC8-IC12 are in a state such that they connect the connectors CE1, CE2 and CE4 to the connectors CV1, CV2 and CV4 via the lines L5, L6 and L8, while the reversers IC7 and IC11 ensure on the one hand the connection between CE3 and CVP and on the other hand the connection between CCP and CV3.

In the same fashion, the computers 01, 02 and 04 function normally, in local mode, while the computer 03 is completely and perfectly connected to the peripheral P, and the switching operations in order to pass from one connected computer to another are performed in instantaneous fashion, totally unnoticeable by the users, by simple manipulation of the switches CC1 to CC4.

In preferred fashion, the various interrupters and reversers commanded IC1 to IC12 are of the semi-conductor type and accomplished for example according to the C-MOS technology in addition, the mechanical switches CC1 to CC4 may also be semiconductor switches.

IIn addition, it may be possible to consider localization of these switches CC1 to CC4 at the level of each computer, so that the user does not have to move in order to perform the switching of his own computer on the peripheral.

Finally, it is possible to substitute the manual switching such as described by an automatic switching by logical pathway. In this case, a demand for connection may be transmitted by a computer via the sehal connector, processed by an appropriate processing circuit in the switching device, this processing circuit replacing the selection circuit described earlier in order to command the switching circuit as a function of the orders received.

Of course, the present invention is not strictly limited to the form of accomplishment described above and represented on the designs; rather the expert will understand how to make any variation or modification conforming with its framework.

## Claims

1. A switching device between a multiplicity of computers (01-04), each including a display screen (E1-E4), and a peripheral (P) for recording of screen images or analogous images, each computer including a first output for a video display signal, a second output for numerical signals and each screen including an input for a video display signal, while the peripheral includes a first input for a video signal of an image to be recorded, a second input for numerical signals and an output for a video command signal, characterized by the fact that it includes means (100) in order to select which of said computers should be connected to the peripheral and switching means (200) commanded by the selection means in order to connect the first and second outputs of said selected computer to the first and second inputs of the peripheral and in order to connect the output of said peripheral to the input of the screen of said selected computer, and in order to simultaneously connect the first output of each of the non-selected computers to the input of their respective screens.

2. A device according to claim 1, characterized by the fact that the selection means (100) include selection contacts (CC1-CC4) with manual command determining the respective logical states (IN1-IN4) for a set of command lines whose number is equal to that of the computers capable of being connected to the device.

3. A device according to claim 1 or 2, characterized by the fact that the switching means (200) include a set of switches (IC1-IC12) commanded by the signals present on said command lines.

4. A device according to anyone of claims 1 to 3, characterized by the fact that the commanded switches (IC1-IC12) are semi-conductor switches.

5. A device according to one of claims 3 or 4, characterized by the fact that the selection means include in addition an inhibition circuit (G12-G43) in order to avoid the presence of signals on the command lines no longer connecting a computer to the peripheral.

6. A device according to anyone of claims 1 to 5, characterized by the fact that the switching means (200) are connected to the inputs and outputs of the computers and the peripheral by a set of multi-plug connectors (CE1-CE4, CS1-CS4, CV1-CV4, CVP, CNP, CCP).

7. A device according to claim 6, characterized by the fact that the switching means operate a switching on the set of plugs of each connector.

FIG.1a

FIG.1b

FIG.2

FIG_3

FIG_4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 139 901 (GANSKE et al.) * Figures 1,3; column 1, lines 41-54; column 2, lines 14-28; column 3, line 46 - column 4, lines 27,50-54; column 5, lines 21-31 * | 1 | G 06 F 3/153 |
| A | | 2,3 | |
| X | MINI-MICRO SYSTEMS, vol. 17, no. 10, August 1984, pages 195-196,199-200; M. GREENBERG et al.: "Low-cost multiuser system exploits PC-compatible workstations" * Page 195, figure 1 and left-hand column, lines 1-4; page 196, figure 2 and right-hand column, line 3 - page 199, line 2 * | 1 | |
| A | US-A-4 677 570 (TAKI) * Figures 1,2; column 1, line 56 - column 2, line 2, line 25 - column 3, line 46 * | 1-4 | TECHNICAL FIELDS SEARCHED (Int. Cl.5)  G 06 F 3 |

The present search report has been drawn up for all claims

| Place of search | Date of completion of the search | Examiner |
|---|---|---|
| THE HAGUE | 20-09-1990 | WEISS P. |